# EUROPEAN PATENT APPLICATION

(11) **EP 1 930 543 A1**
(43) Date of publication of application: **11.06.2008**
(21) Application number: 06025054.5
(22) Date of filing: 04.12.2006
(51) Int. Cl.: F01D 1/02, F01D 9/04, F01D 9/02

(54) **Partial admission turbine**

(71) Applicant: SIEMENS AKTIENGESELLSCHAFT, 80333 München (DE)
(72) Inventor: Senior, Peter, Dr., LE8 5PY Countesthorpe Leicester (GB)

(57) **Abstract**

A turbine (8), comprising a turbine section being surrounded by a turbine casing (22), a turbine rotor (10) with turbine blades 19 extending at least through the turbine section and a stator annulus (21) inside the turbine casing (22) around the turbine rotor (10) characterised in that the stator annulus (21) covers less than 360 degrees and the remaining area is covered from the upstream side of the turbine blades 19.

## Description

### Background of the invention

The invention relates to turbines, in particular to gas turbines.

In very small gas turbines of conventional axial design, achieving reasonably efficient aerodynamics for the blading requires very high rotational speeds and small annulus heights. This introduces mechanical challenges in integrity and sealing, requiring small parts which are difficult to manufacture, especially internal cooling passages in high temperature rotating blades. Each size of gas turbine in a range repeats these problems for a different set of components. The net effect is disproportionate cost and significantly reduced efficiency relative to larger gas turbine units.

The smallest size of gas turbines in general commercial use are auxiliary power units (APUs) which are used in aircraft to generate power. They tend to have very low efficiency in comparison with reciprocating prime movers at this scale but in this application the vastly reduced weight and size compared to the alternatives outweigh the disadvantages. However, any attempt for gas turbines to make inroads on land or marine based reciprocating engine markets has been severely constrained by such technical inferiority.

DE 27 12 349 discloses a distributing regulator of a steam turbine for essentially reducing or removing thermal stress in the turbine rotor. The steam temperature depends on the way in which steam is introduced into the turbine. Therefore, the steam flow ratio is controlled according to the load change at any kind of steam supply, full admission or partial admission. Partial admission has been used in steam turbines for a long time, but then only for the first stage.

US 5,487,643 discloses a partial admission axial impulse turbine including a cover for the turbine wheel rotating assembly to reduce a pumping loss inherently caused by a pressure gradient created by the blades when the turbine rotates. The arrangement leaves a portion of the turbine wheel's annular area on the exit face of the turbine wheel open for gas flow out of the blades being fed by the turbine nozzles, with the remaining annular area being covered on the downstream side. The nozzle or nozzles fill only a portion of the annular area, with the gas flowing only through said portion. The remaining portion of the annular area is free of nozzles.

### Objective of the application

The objective of the invention is to provide an improved turbine, in particular at small power sizes relative to conventional industrial gas turbines.

### Solution according to the invention

These objectives are solved by a turbine with the features of claim 1 and by an auxiliary power unit according to claim 19. The depending claims define further developments of the invention.

An inventive turbine, which may be a gas turbine, comprises a turbine section. The turbine section is surrounded by a turbine casing and a turbine rotor with turbine blades extends at least through the turbine section. The turbine further comprises a turbine sector and a turbine annulus inside the turbine casing around the turbine rotor. The turbine stator extends over less than 360 degrees and defines flowing and non-flowing sectors of the annulus with the flowing sectors coinciding with the annular sector over which the stator extends. The non-flowing sectors may be covered, in particular at their upstream side.

The solution to the objective according to the invention is that it abandons a fundamental premise of conventional turbine design, in particular a gas turbine design, namely that the actively flowing turbine annulus must be 360°. In the invention, the necessary flow area can be concentrated into sectors of blading defined by the flowing sector or flowing sectors over which the stator extends.

The fundamental idea of the invention is that the necessary flow area in the turbine annulus for hot gas passing through the turbine blading and driving the turbine is concentrated into one or more annular sectors of the annulus that are of less than 360°.

The blading can therefore be much larger than it is conventionally the case the turbine wheel can have a large radius. Therefore, the rotational speed can be dropped substantially to maintain the optimal aerodynamic speed much easing the duty and cost of the gear box, as well as lowering centrifugal stress and creep for longer life. Using different admission sector angles or different numbers of sectors (and cans) means that the turbine and combustor hardware can be standardised over power ranges. This would allow volume advantages such as purchasing discounts, lower service and assembly buffers, fewer machine setting changeovers and improved machine utilisation to be exploited.

For a given power rating, this also increases blade height leading to lower proportion of tip leakage area.

This leads to a small industrial gas turbine of fundamentally different layout based on partial admission to the turbine brings a host of performance, reliability and cost advantages to enable challenging in markets currently dominated by high maintenance/low availability aero-derivative engines or reciprocating engines.

The layout permits the easy use of a recuperator giving drastically increased efficiency without many of the difficult mechanical compromises experienced by conventional gas turbine designs or the heavy capital costs of combined cycle units. This further enables challenging in markets currently dominated by high maintenance/low availability reciprocating engines.

Intermittent exposure of rotor blading to hot gas may also allow a lower mean blade temperature and thus even cheaper material and/or longer life.

In addition, the stator segments feeding the turbine rotor can have fewer but larger stator vanes. This will make the internal cooling much easier to manufacture. Because the scaling increases the volume to surface ratio of the driving flow in both rotor and stator, there is proportionally less surface to cool and proportionally smaller boundary layers further improving efficiency by reduced cooling need.

An advantageous development of the invention comprises a cooling flow path which is designed such as to cool the outside of the rotor blades while they are moving in a non-flowing sector between two flowing sectors of the fixed stator. This means that no expensive and difficult to manufacture hollow castings are required for the rotors, cheapening production. Hence, some rotor blades can be manufactured by forging where it is not necessary to provide hollow cooling channels. This allows better materials and/or enhanced properties and massively reduced production lead times.

The absence of a hollow core in such rotor blades means that there is more cross-section to resist centrifugal tensile loading of the rotor blades, increasing their strength. At least a part of the coolant streaming through the flow path across the rotor between two stator sections can also be directed to the following nozzle stage for re-use. This significantly increases cycle efficiency without increasing physical operating temperatures (or conversely, advantage can be taken of lower temperature for longer life). In a stator with multiple nozzle stages, the first stage stator cooling would be separately supplied from the compressor exit.

The design freedom gained by partial admission can be exploited in the interests of extensive component standardisation over a wider power range with production and service benefits. This is achieved by using different sector angles or engines of different power. The system is compact and particularly well suited to very rapid maintenance, since the individual stator sections can be designed to be separately removed as a "pack".

Furthermore, the gas turbine according to the present invention would have at least two sectors and a respective number of combustors which would therefore be larger in scale and fewer than in a conventional gas turbine. This would mean costs savings, higher starting reliability (two ignitors per can affordable) and the better relative manufacturing tolerances would lead to tighter temperature spread control giving better NOₓ, fewer dynamic problems and better turbine life. Moreover, a respective number of exhaust diffuser channels could also be present. The compartmentalising also allows tighter packing of turbine auxiliaries, with benefits for customers with restricted space, such as ships and oil rigs, and offsetting the larger size of the core engine compared to a conventional unit of the same power.

The stator nozzle sectors and rotor seal sectors of the inventive turbine can be designed such as to be extractable from the side of the turbine casing. This allows the speeding up of maintenance.

The rotor is preferably an overhung rotor. This reduces the number of bearings required and thus costs. The bearings can be located at the hot end of the rotor and the overhung rotor can be supported on hot end bearings supported by struts running between the exhaust diffuser channel sectors.

The turbine casing may comprise bulkheads which are made retractable from the side so that the overhung rotor may be arranged and designed such that it can be rolled back after extracting the nozzles, bulkheads and rotor seals. This allows a drastic speeding up of rotor maintenance and permits parallel maintenance of rotor and stator parts for even higher availability of the engine.

In another advantageous development of the invention the turbine comprises at least two combustor casings. One bearing is located at the cold end of the rotor and a beam rotor is used. It is supported on one bearing supported on struts between the two combustor casings and one bearing at the hot end supported on struts between the exhaust diffuser sectors.

In a third development the rotor is overhung from two bearings at the cold end supported by struts between the combustor casings. The rotor can be formed by large turbine discs and the compressor can be a suitable centrifugal or radial compressor. Such a compressor would be mounted directly onto the highest pressure or lowest pressure turbine disc. This allows for a very short and rigid rotor. There are low clearances for high efficiency, significant cost reduction of rotor and compressor and much better rotor dynamics. Furthermore, it makes it very easy to get at combustors and transition-ducts (as well as the compressor itself) causing a further increase in maintenance speed.

The air intake of the gas turbine could be designed in a way that it compresses the air radially inwards. This causes a reduced separation in boundary layers and thus an increase in aerodynamic efficiency and improvement of surge margins. Alternatively a conventional centrifugal compressor flowing radially outwards could be used. Either way there should also be a substantial reduction in costs compared to the many rows of conventional stages found in axial compressors.

If placed at the hot end, the centrifugal compressor drastically reduces the flow path needed for fitting a recuperator thus improving the possibility of using a recuperator in the inventive design. The recuperator may be formed such as to integrate the exhaust flow heat exchanger into the diffuser passages of the gas turbine. This means that the normal heat exchanger loss is offset by using the highly turbulent diffusing flow for high heat transfer efficiency. Recuperated gas turbine cycles require a relatively low pressure ratio in order to be efficient (due to practical limitations in firing temperature).

Further features, characteristics and advantages of the invention become clear from the following description of the embodiments in reference to the accompanying drawings.

### Brief description of the drawings

Figure 1 shows a gas turbine with three combustors, three sectors of blading and three exhaust diffuser channels.
Figure 2 shows a gas turbine with two combustors, two sectors of blading and two exhaust diffuser channels with the alternative radially inward flowing compressor. The view below centre line is at 90° to that above centre line.
Figure 3 shows a gas turbine with two combustors, two sectors of blading and two exhaust diffuser channels acting as heat exchangers.
Figure 4 shows a gas turbine with two combustion casings, a beam rotor and bearings between the combustor casings and at the hot end of the turbine.

### Detailed description of the embodiment

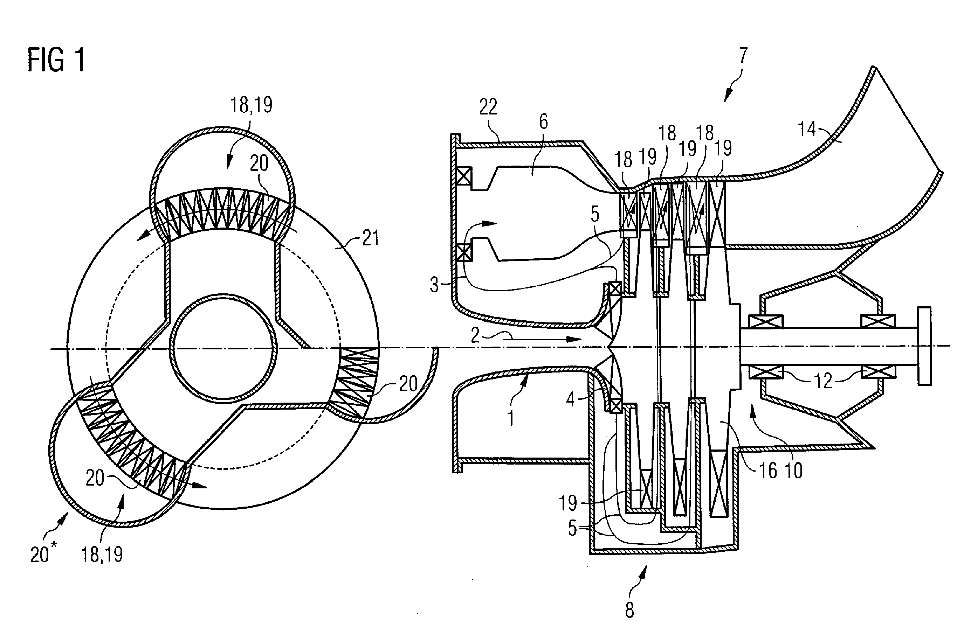

Figure 1, schematically shows a side view (to the right) and a front view (to the left) of a gas turbine 7 comprising an air inlet 1, a centrifugal compressor 4, three combustors 6, an annulus 21 with three sectors 20, a turbine 8 with stator blades 18 and rotor blades 19 and three exhaust diffuser channels 14 and an overhung rotor 10.

Figure 1, to the left, schematically shows a front view of sectors 20 of the annulus 21. The upper part is a view of a single sector, whereas the lower part is a view of two sectors obtained by a clockwise rotation of the upper view by 90°.

The air inlet 1 is aerodynamically formed and is located at the upstream end of the gas turbine 7 with the longitudinal axis of the air inlet 1 being identical to the longitudinal axis of the gas turbine 7. The inlet of the centrifugal compressor 4 is joined to its downstream end with the longitudinal axis of the compressor 4 also being identical to the longitudinal axis of the gas turbine 7.

The three combustors 6 are circumferentially arranged around the longitudinal axis of the gas turbine 7. The exits of the combustors 6 are open towards the stator blades 18 of the first stage of the turbine 8. Within the turbine 8 stator blades 18 and rotor blades 19 are alternately arranged. At the downstream end of the turbine 8 there are the three exhaust diffuser channels 14 with their upstream end open to the rotor blades 19 of the last stage of the turbine 8.

The overhung rotor 10 is supported on hot end bearings 12 suppported between the three exhaust diffuser channels 14.

In operation of the gas turbine, air 2 passes through the air inlet 1 into the centrifugal compressor 4 where it is compressed. After leaving the compressor, the air flow is divided into partial flows, combustion air flows 3 and cooling air flows 5.

The combustion air flow 3 is directed into the three combustors 6 where it is mixed with fuel and burnt. The hot and pressurised gas from the combustors 6 enters the three open sectors 20 of the annulus to drive, while expanding and cooling, the turbine blades 19 of the turbine 8 and thus the rotor 10 around. After passing the turbine 8 the hot gas exits through the three exhaust diffuser channels 14.

One or more of the cooling air flows 5 is directed into the annulus 21 between the open sectors 20 for cooling the rotor blades 19 and the stator blades 18 of the turbine 8. After passing over the external surfaces of the rotor blades 19, when these are not opposite the stator blades 18 in the open sectors 20 the cooling air 5 is passed through the stator blades 18. Each rotor stage is cooled by a cooling air flow 5 which is then re-used as cooling for the next stator stage downstream.

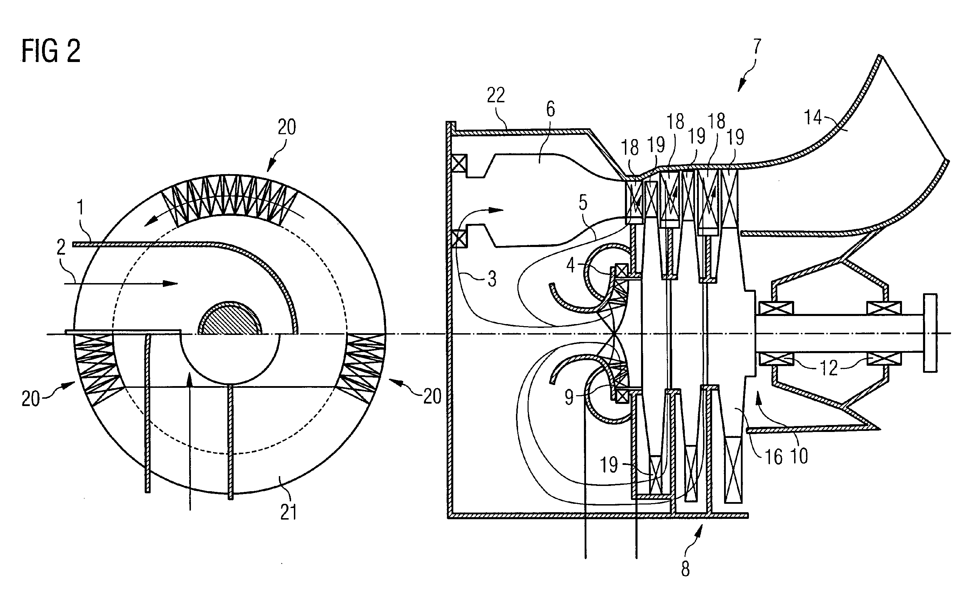

Figure 2, schematically shows a side view (to the right) and a front view (to the left) of a gas turbine 7 comprising an air inlet 1 (see Fig. 2, on the left), a centrifugal compressor, two combustors 6, an annulus 21 with two sectors 20, a turbine 8 with an overhung rotor 10, stator blades 18 and rotor blades 19, and two exhaust diffuser channels 14.

Figure 2, to the left, schematically shows a front view of sectors 20 of the annulus 21 and the air inlet 1. The upper part (of both views) is a view of a single sector, whereas the lower part is a view of two sectors obtained by a counterclockwise rotation of the point of view by 90°.

The air inlet 1 (see Fig. 2, on the left) is arranged radially with its downstream end near the inlet of the centrifugal compressor 9 which is implemented as a radial-inwards mixed Ljungstrom/centrifugal compressor. The longitudinal axis of the compressor 9 is identical to the longitudinal axis of the gas turbine 7.

The two combustors 6 are circumferentially arranged around the longitudinal axis of the gas turbine 7. The exits of the combustors 6 are open towards the stator blades 18 of the first stage of the turbine 8. Within the turbine 8 stator blades 18 and rotor blades 19 are alternately arranged. At the downstream end of the turbine 8 there are the two exhaust diffuser channels 14 with their upstream end open to the rotor blades 19 of the last stage of the turbine 8.

The overhung rotor 10 is supported on hot end bearings 12 supported between the two exhaust diffuser channels 14.

In operation of the gas turbine according to the second embodiment, air 2 is drawn through the inlet 1 (see Figure 2, on the left) into the centrifugal compressor 9 where it is compressed. After leaving the compressor, the air flow is divided into partial flows, namely combustion air flows 3 and cooling air flows 5.

The combustion air flows 3 are directed into the two combustors 6 where they are mixed with fuel and burnt. The hot pressurised gas from the combustors 6 enters the two open sectors 20 of the annulus 21 to drive, while expanding and cooling, the turbine blades 19 of the turbine 8 and thus the rotor 10 around. After passing the turbine 8 the hot gas exits through the two exhaust diffuser channels 14.

As in Figure 1, the cooling air flows 5 are directed into the annulus 21 between the open sectors 20 for cooling the rotor blades 19 and the stator blades 18 of the turbine 8. After passing over the external surfaces of the rotor blades 19, when these are not opposite the stator blades 18 in the open sectors 20 the cooling air 5 is passed through the stator blades 18. Each rotor stage is cooled by a cooling air flow 5 which is then re-used as cooling for the next stator stage downstream.

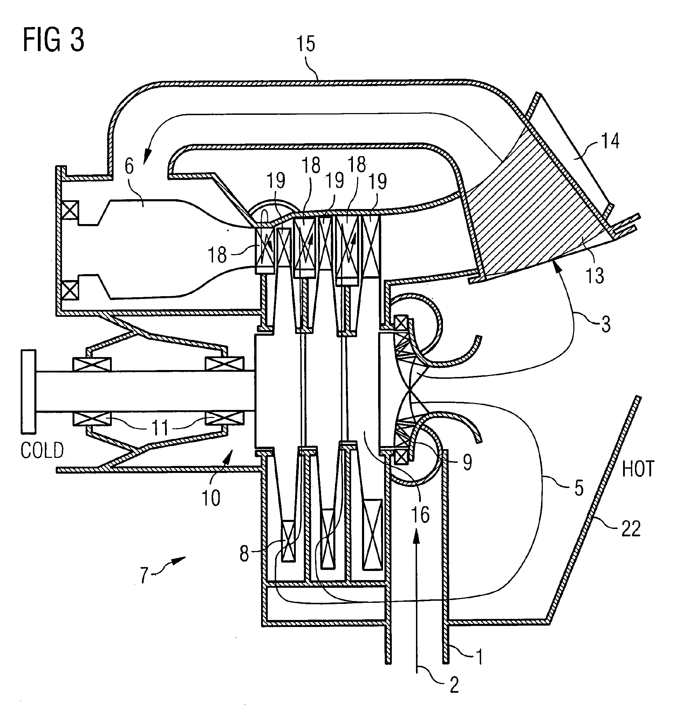

Figure 3 schematically shows a side view of a gas turbine 7 comprising an air inlet 1, a centrifugal compressor 9 and two combustors 6. The gas turbine 7 further comprises an annulus 21 with two sectors 20 (not shown, but similarly as depicted in Figures 1 and 2), a turbine 8 with an overhung rotor 10, stator blades 18 and rotor blades 19, and two exhaust diffuser channels 14.

The air inlet 1 is arranged radially with its downstream end near the inlet of the centrifugal compressor 9 which is implemented as a radial-inwards mixed Ljungstrom/centrifugal compressor. The longitudinal axis of the compressor 9 is identical to the longitudinal axis of the gas turbine 7.

Different from Figure 2 the air inlet 1 and the radially inward centrifugal compressor in Figure 3 is placed between the two exhaust diffuser channels 14 rather than between the combustors 6. The overhung rotor 10 is supported on cold end bearings 11 supported between the two combustors 6.

Ducts 15 are located between the outlet of the compressor 9 and the inlets of the combustors 6. The ducts lead through the exhaust diffuser channels 14. They are so formed as to act as heat exchangers 13 in their sections extending through the exhaust diffuser channels 14. Such heat exchanger passages are formed as diffuser passages for the hot exhaust passing through them in the exhaust diffuser channels.

The two combustors 6 are circumferentially arranged around the longitudinal axis of the gas turbine 7. The exits of the combustors 6 are open towards the stator blades 18 of the first stage of the turbine 8. Within the turbine 8 stator blades 18 and rotor blades 19 are alternately arranged. At the downstream end of the turbine 8 there are the two exhaust diffuser channels 14 with their upstream end open to the rotor blades 19 of the last stage of the turbine 8.

In operation of the gas turbine engine according to the third embodiment, air 2 is drawn into the centrifugal compressor where it is compressed. After leaving the centrifugal compressor, the air flow is divided into partial flows, the combustion air flows 3 and the cooling air flows 5.

The combustion air flows 3 enter ducts 15 which contain heat exchangers 13 exposed to the two exhaust diffuser channels 14 and guide air preheated in the heat exchanger 13 into the combustors 6 where it is mixed with fuel and burnt. The hot pressurised gas from the combustors 6 enters the two open sectors 20 of the annulus 21 to drive, while expanding and cooling, the turbine blades 19 of the turbine 8 and thus the rotor 10 around. After passing the turbine 8 the hot gas exits through the two exhaust diffuser channels 14 and gives up some of its heat in the heat exchanger 13.

The cooling of the stator blades 18 and the rotor blades 19 is implemented in the same way as in the Figures 1 and 2.

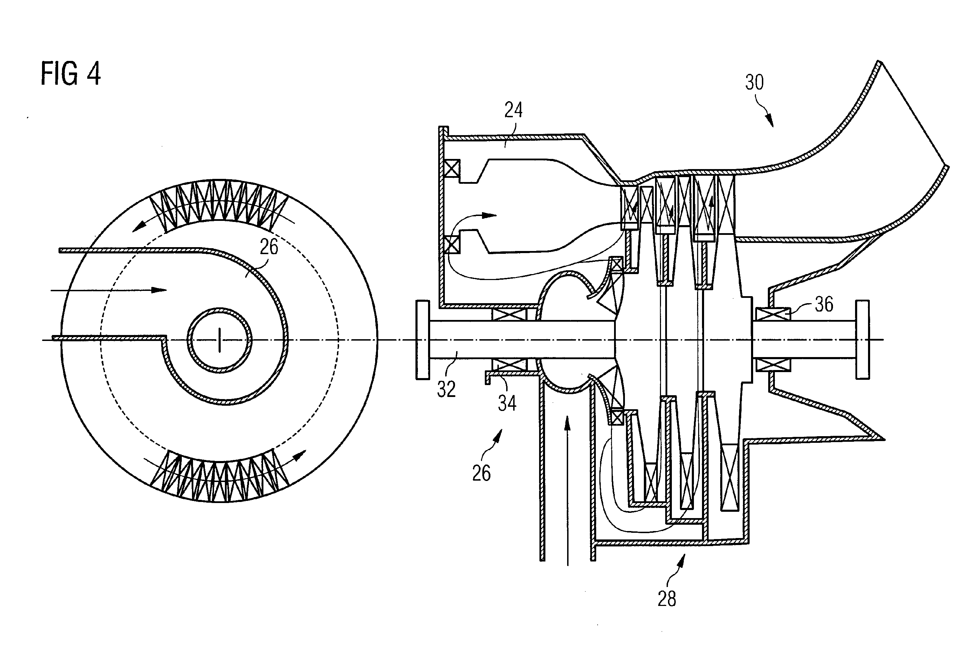

A further embodiment of the invention is shown in Figure 4. This embodiment comprises two (or more) combustor casings 24, a radial inwards compressor 26, a turbine 28 and two (or more) exhaust diffused channels 30. It differs from the preceding embodiments in that a beam rotor 32 is used. The beam rotor 32 is supported by a first bearing 34 which is located between the combustor casings 24 and by a second bearing 36 which is located at the hot end of the turbine 28.

In the embodiments shown in Figures 1 to 4, gearing may be used between the compressors 6 and the turbine 8 to match the speed with the dimensions.

It should also be noted that there are at least two flow streams in all embodiments. A first stream or combustion air flows 3 representing the vast portion corresponds to the main flow in a gas turbine. A second smaller stream or cooling air flows 5 corresponds to the cooling air flow in conventional gas turbines. The cooling air flow is injected as jets in the blade passages (not shown) not used by the main flow. Hence the injection takes place between the admission sectors 20 shown to the left in Figure 1.

While the hot pressurised gas resulting from the combustion air flow 3 continues all the way through the turbine stages as in a conventional turbine, the cooling air flow is extracted after each blade row and either injected to the next blade row between the guide vane sectors 20, or used to cool the downstream stators, or directly into the guide vane sector.

The main flow path and "cooling" chambers on the rotor sections are so formed that the flow direction of main and coolant flows are such as to restrict mixing to a minimum. Appropriately "door-shaped frames" at the start and end of each sector achieve this goal, as well as carefully arranging the flows to get maximum static pressure differentials between main and coolant paths at the doorframes.

This will mean that the stator sectors are rotated slightly relative to each other corresponding to the angle of the flow path around the circumference of the rotor.

## Claims

1. A turbine (8), comprising a turbine section being surrounded by a turbine casing (22), a turbine rotor (10) with turbine blades 19 extending at least through the turbine section, a turbine stator and a turbine annulus (21) inside the turbine casing (22) around the turbine rotor (10) **charac- terised in that** the stator (21) extends over less than 360 degrees.

2. The turbine (8) according to claim 1, **characterised in** a turbine blading (18, 19) and **in that** the necessary flow area in the turbine annulus (21) for hot gas passing through the turbine blading (18, 19) and driving the turbine (8) is concentrated into annular sectors (20) of the annulus (21).

3. The turbine (8) according to claim 2, **characterised in** a cooling flow path (5) which is designed such as to cool the outside of the rotor blades (19) while they are moving between two sectors (20) of the annulus (21).

4. The turbine(8) according to claim 3, **characterised in** a stator with different nozzle stages (18) wherein the first stage stator cooling is separately piped from an exit of a compressor (4, 9).

5. The turbine according to claim 3, **characterised in that** at least a part of the rotor coolant streaming through the flow path is also directed to the following nozzle stage.

6. The turbine according to any of the preceding claims, **characterised in that** the rotor blades (19) are forged rotor blades.

7. The turbine according to any of the preceding claims, **characterised in that** it has at least two combustors (6) and a corresponding number of exhaust diffuser channels (14).

8. The turbine (8) according to any of the preceding claims, **characterised in that** stator nozzles and rotor seals are used which are designed such as to be extractable from the side of the turbine casing (22).

9. The turbine (8) according to any of the preceding claims, **characterised in that** an overhung rotor (10) is used.

10. The turbine (8) according to claim 9, **characterised in** having bearings (11) at the hot end of the rotor (10) and **in that** the overhung rotor (10) is supported on hot-end bearings (11) supported between the exhaust diffuser channels (14).

11. The turbine (8) according to the claims 9 and 10, **characterised in** having bulkheads of the turbine casing (22) which are made retractable from the side and **in that** the hot end overhung rotor (10) is arranged and designed such that it can be rolled back after extracting the nozzles, bulkheads and/or rotor seals.

12. The turbine (8) according to claim 9, **characterised in** having two combustor casings (6) and bearings (12) at the cold end of the rotor (10) and **in that** the overhung rotor (10) is supported on the cold-end bearings (12) supported between the two combustor casings (6).

13. The turbine (8) according to one of the claims 1 to 8, **characterised in** having a beam rotor (10) which is supported on one bearing between two combustor casings (6) and one bearing between the exhaust diffuser channels (14).

14. The turbine (8) according to any of the preceding claims, **characterised in** having turbine discs (16) that form the rotor (10) and a compressor (4, 9) which is a centrifugal compressor (4, 9) and which is mounted directly onto one of the turbine discs (16).

15. The turbine (8) according to any of the preceding claims, **characterised in** a compressor (9) which is designed and arranged such as to compress the air radially inwards.

16. The turbine (8) according to the claims 14 or 15, **characterised in** a centrifugal compressor (4, 9) which is placed at the inlet end of the rotor (10).

17. The turbine (8) according to the claims 14 or 15, **characterised in** a centrifugal compressor (4, 9) which is placed at the exhaust end of the rotor (10).

18. The turbine (8) according to the claim 17, **characterised in** at least one duct (15) that leads from the compressor (4, 9) to the combustor (6) crossing one of the exhaust diffuser channels (14) and that forms an exhaust flow heat exchanger in the crossing area of the duct (15) and the exhaust diffuser channel (14).

19. The turbine (8) according to any of the preceding claims, **characterised in that** it is a gas turbine.
